# EUROPEAN PATENT SPECIFICATION

(11) **EP 2 502 120 B1**
(45) Date of publication and mention of the grant of the patent: **08.02.2017**
(21) Application number: 10778742.6
(22) Date of filing: 03.11.2010
(51) Int. Cl.: G05D 1/02

(54) **AUTONOMOUSLY MOVABLE AGRICULTURAL VEHICLE**
AUTONOM BEWEGLICHES LANDWIRTSCHAFTLICHES FAHRZEUG
VÉHICULE AGRICOLE POUVANT SE DÉPLACER DE MANIÈRE AUTONOME

(30) Priority: 17.11.2009 NL 1037476
(43) Date of publication of application: 26.09.2012
(73) Proprietor: Lely Patent N.V., 3147 PB Maassluis (NL)
(72) Inventor: NOORDAM, Jacco, NL-2676 BH Maasdijk (NL)
(74) Representative: Octrooibureau Van der Lely N.V.
(86) International application number: PCT/NL2010/000160
(87) International publication number: WO 2011/062481

(56) References cited:
- EP-A2- 1 406 140
- WO-A1-02/075470
- US-A- 4 800 977
- US-A1- 2006 149 465
- US-A1- 2007 112 475

## Description

The invention relates to an autonomously movable agricultural vehicle.

The invention also relates to a method for controlling an autonomously movable agricultural vehicle and software for managing an autonomously movable agricultural vehicle.

Autonomously movable agricultural vehicles are increasingly used in agriculture. Autonomously movable agricultural vehicles of this type are, for example, used to clean livestock buildings or, for example, to transport feed, ensuring that fresh feed is continuously available to animals in a livestock building. Autonomously movable agricultural vehicles are also used, for example, for the ongoing dynamic demarcation of parts of pastureland.

Autonomously movable agricultural vehicles of this type are usually battery-driven agricultural vehicles travelling a specific route through a livestock building or through a pasture. This route could comprise a random route or could comprise a pre-programmed route. A centrally located charging station could, for example, supply the autonomously movable agricultural vehicle with energy.

A disadvantage of the autonomously movable agricultural vehicles described above is that the charging time of the agricultural vehicles limits the effectiveness of the autonomously movable agricultural vehicle.

The object of the invention is to produce an autonomously movable agricultural vehicle which has an improved effectiveness.

The object is achieved with an autonomously movable agricultural vehicle according to claim 1. The object is also achieved with a method for controlling an autonomously movable agricultural vehicle according to claim 19. The object is also achieved with software for controlling the autonomously movable agricultural vehicle according to claim 23.

The autonomously movable agricultural vehicle according to the invention comprises a motor to drive the autonomously movable agricultural vehicle, and comprises a battery to supply energy to the motor. The autonomously movable agricultural vehicle comprises a control circuit to control the motor to adjust a speed of the autonomously movable agricultural vehicle. The control circuit is configured to set the speed of the autonomously movable agricultural vehicle such that the energy drawn from the battery over a predefined distance is minimal.

The effect of the autonomously movable agricultural vehicle according to the invention is that the energy drawn to drive the motor is adjusted in such a way that as little energy as possible is drawn from the battery. As a result, the energy available in the battery is used to optimum effect, whereby a maximum operating range is achieved with one single battery charge. The speed of the autonomously movable agricultural vehicle is adjusted in order to maintain the drawn energy at a low level. In agricultural applications, the speed of autonomously movable agricultural vehicles is often less relevant. The speed of the autonomously movable agricultural vehicle may, for example, not be higher than a specific value so that the animals do not become agitated or nervous, or so that the animals can step aside if the autonomously movable agricultural vehicle moves towards them. The energy consumption of the autonomously movable agricultural vehicle is related to the speed of the autonomously movable agricultural vehicle. If, for example, a part of the route is slippery, the tyres of the autonomously movable agricultural vehicle would have less grip, as a result of which a relatively large amount of energy may be lost due to the slipping of the tyres. Reducing the speed could ensure that the tyres gain a better grip, as a result of which the slipping is reduced and therefore less energy is required to travel the same distance. Also, for example, a specific underlying and/or locally uneven surface would require an adjusted speed in order to travel the distance with as little energy as possible. By adjusting the speed of the autonomously movable agricultural vehicle in such a way that the energy drawn from the battery over a predefined distance is always minimal, the distance travelled for each battery charge can be optimized so that the effectiveness of the autonomously movable agricultural vehicle is also optimal. The predefined distance is then also normally less than the total distance of the route to be travelled by the autonomously movable agricultural vehicle, so that different optimum speeds apply to different subsegments of the total route.

In one embodiment of the autonomously movable agricultural vehicle, the autonomously movable agricultural vehicle comprises an energy sensor to measure the energy drawn from the battery. The energy sensor could, for example, measure a current which is drawn from the battery. Given that the voltage over a battery remains more or less constant, the current drawn provides a measure for the energy drawn from the battery. The energy sensor could also comprise a torque measurement to measure the torque via, for example, a strain gauge on the axle.

In one embodiment of the autonomously movable agricultural vehicle, the energy sensor is configured to measure the current which is drawn from the battery. By measuring the time over the predefined distance and by measuring the average current consumption over this predefined distance, the optimum speed can be determined with the lowest current consumption per metre. The lowest possible consumption is achieved by keeping the time-by-current (t*l) factor as low as possible.

In one embodiment of the autonomously movable agricultural vehicle, the autonomously movable agricultural vehicle comprises a storage medium to store route information which comprises instructions for the autonomously movable agricultural vehicle in order to move along a predefined route. The control circuit is also configured to determine the energy drawn from the battery over the predefined distance along the route. Autonomously movable agricultural vehicles usually follow a predefined route which is, for example, determined by a farmer in advance. This route comprises, for example, the passage through the livestock building in order to clean the livestock building, or comprises, for example, a move back and forth along feed points in a livestock building in order to ensure that the feed is near to the animals so that the animals always have sufficient fresh feed. Given that the route concerned must be travelled more often in embodiments of this type, the autonomously movable agricultural vehicle could measure and could minimize the energy consumption along the route.

In one embodiment of the autonomously movable agricultural vehicle, the autonomously movable agricultural vehicle is configured to store historical data relating to the travelled route on the storage medium, wherein the historical data comprise information relating to a previous passage along the route by the autonomously movable agricultural vehicle. The historical data could, for example, comprise the total energy consumption along the route. The historical data could, for example, also indicate specific energy consumption in a part of the route, for example, if a slope occurs in the route or an obstacle is located somewhere in the route. The historical data could also comprise information relating to changed conditions, such as an animal which is located on the planned route and has not moved aside. The autonomously movable agricultural vehicle will then collide with the animal and will be able to regard this "obstacle" as a historical datum. Given that the autonomously movable agricultural vehicle cannot usually determine whether an obstacle in the route is an "incidental" obstacle or a new "permanent" obstacle, the autonomously movable agricultural vehicle will be able, for example, to move more slowly at the relevant point along the route on a subsequent occasion when it passes along the route in order to ascertain whether the obstacle was indeed an "incidental" obstacle. The historical data could, for example, also comprise a total energy consumption or could comprise a load of the autonomously movable agricultural vehicle. The load could, for example, vary during the passage along the route. If, for example, the autonomously movable agricultural vehicle is a cleaning vehicle for cleaning livestock buildings, the load of the cleaning vehicle could increase, for example, due to the quantity of dirt or manure which is propelled by the cleaning vehicle. If the autonomously movable agricultural vehicle distributes feed at predefined points, the load of the vehicle may decrease. For example, the optimum speed of the autonomously movable agricultural vehicle, at which minimum energy is drawn from the battery, could vary due to the changing load. This change in the optimum energy could be stored as a historical datum, whereby the autonomously movable agricultural vehicle can adjust the speed locally according to these stored historical data.

In one embodiment of the autonomously movable agricultural vehicle, the storage medium comprises the route divided up into subsegments, whereby the storage medium comprises a speed value for each subsegment for the autonomously movable agricultural vehicle. The route could, for example, be stored in a type of table, wherein the route is divided up into subsegments. For each of these subsegments, the route could, for example, comprise a row in the table, wherein the different columns in the table could comprise the length of the subsegment, the time required to pass through the subsegment and the quantity of consumed current drawn from the battery during the passage through the subsegment. The table could of course also comprise additional columns and/or rows to store more information relating to the route and/or the different subsegments and make this available to the autonomously movable agricultural vehicle. The historical data could also be included in the table in order, for example, to record local anomalies, so that the autonomously movable agricultural vehicle could anticipate the local anomalies. This local anomaly could, for example, comprise an obstacle. As a result, the division of the route into subsegments could, for example, be revised and/or the speed value associated with a subsegment could be adjusted.

In one embodiment of the autonomously movable agricultural vehicle, the storage medium also comprises a stored energy value for each subsegment, wherein the energy value represents the energy which is required if the subsegment is passed through with the associated speed value. The stored energy value is, for example, one of the historical values which was measured during a previous passage along the route. The stored energy values could, for example, also be used to determine whether the route can still be travelled with the amount of energy available in the battery, given that it is possible to predict, using the stored energy values, how much energy is required to pass through the subsegments. The autonomously movable agricultural vehicle could thus determine whether the route can be travelled once more, or whether the journey must be interrupted halfway in order to visit the charging station. The battery is preferably not completely discharged but, for example, is discharged to a defined minimum level. The amount of energy still present in the battery could, for example, be derived from historical data or could, for example, be measured by measuring the voltage drop under load. In such a way, total battery discharge can be prevented, thereby increasing the life of the battery.

In one embodiment of the autonomously movable agricultural vehicle, the control circuit is configured to control the motor during the passage through a defined subsegment with a speed value which differs from the speed value which is stored for the defined subsegment, wherein the control circuit is configured to measure the energy drawn during the passage through the defined subsegment with the differing speed value and to compare it with the stored energy value of the defined subsegment. This produces a self-learning and optimized autonomously movable agricultural vehicle which through time determines the optimum speed for each of the subsegments, wherein, for each subsegment, the energy required to pass through the subsegment is minimal. Despite the fact that the route travelled by the autonomously movable agricultural vehicle has usually been pre-programmed, minor variations will occur through time. Thus, for example, the number of animals in a livestock building may vary, as a result of which the load of an autonomously movable agricultural vehicle such as a cleaning vehicle may also vary. Obstacles could also occur along the route, such as a stack of hay bales, around or alongside which the autonomously movable agricultural vehicle must move, whereby the route must be adjusted. As a result, the speed at which the minimum energy is drawn from the battery for a defined subsegment could therefore also vary. Since the autonomously movable agricultural vehicle is configured to pass through a subsegment at a speed which differs from the stored speed, it can be determined whether less energy is drawn from the battery at this differing speed and therefore whether the differing speed is a better speed under the changing conditions in the route. A self-learning autonomously movable agricultural vehicle could thus also be produced, wherein only the route needs to be entered, after which the self-learning autonomously movable agricultural vehicle will, through time, determine the speed for each subsegment at which the energy drawn from the battery is minimal. Whenever the route is travelled, measurements will be performed to ascertain whether the required energy is higher for a subsegment than in a preceding cycle. The speed for each of the subsegments can thus be optimized, so that, through time, the amount of energy required to travel the route is the minimum and the operating range of the autonomously movable agricultural vehicle is the maximum.

The passage through a defined subsegment with a differing speed value could, for example, be initiated because an increased required energy is measured for a defined subsegment. Increased required energy of this type could indicate that the conditions for the autonomously movable agricultural vehicle have changed and that a differing speed value would perhaps be necessary in order to pass through the subsegment with minimal energy under these differing conditions.

In one embodiment of the autonomously movable agricultural vehicle, the control circuit is configured to adjust the differing speed value and/or the energy value associated with the differing speed value of the defined subsegment in the storage medium if the energy consumption during the differing speed value is lower than the energy value stored in the storage medium. As indicated earlier, a self-learning and self-adjusting vehicle is thus produced.

In one embodiment of the autonomously movable agricultural vehicle, the autonomously movable agricultural vehicle comprises a speed sensor to measure the speed of the autonomously movable agricultural vehicle. The speed of the autonomously movable agricultural vehicle does not always match the required speed which, for example, arises through the control of the motor by the control circuit. Many factors in an agricultural environment determine the ultimate speed of the autonomously movable agricultural vehicle. For example, the tyres may slip over a part of the floor, as a result of which the required speed is not achieved. Similarly, the extent of slipping may depend on the control signal to the motor. If the speed of the autonomously movable agricultural vehicle as measured by the speed sensor does not match the speed as set by the control circuit, the autonomously movable agricultural vehicle can record this and undertake measures. The autonomously movable agricultural vehicle could, for example, move more slowly until the speed measured by the speed sensor matches the speed as set by the control circuit. At any rate, if the vehicle is moved more slowly, tyres will be able to obtain a better grip on the underlying surface, as a result of which they will slip less quickly and less energy will therefore be lost due to the slipping.

In one embodiment of the autonomously movable agricultural vehicle, the control circuit receives a speed signal from the speed sensor which indicates the measured speed, wherein the control circuit uses the speed signal to determine a position of the autonomously movable agricultural vehicle along the route. As already indicated earlier, the tyres of an autonomously movable agricultural vehicle may slip, as a result of which the actual speed of the autonomously movable agricultural vehicle does not match the speed as set by the control circuit. If the autonomously movable agricultural vehicle comprises a speed sensor which roughly measures the actual speed of the vehicle, a position of the autonomously movable agricultural vehicle in the subsegment of the route can thus be determined with reasonable accuracy.

In one embodiment of the autonomously movable agricultural vehicle, the autonomously movable agricultural vehicle comprises a route sensor to determine a recognition point along the route. Recognition points of this type could, for example, be calibration points to determine the exact position of the autonomously movable agricultural vehicle within a route. A recognition point of this type could preferably comprise a start point and/or end point of a subsegment. Between the recognition points, the autonomously movable agricultural vehicle could determine the position within the subsegment, for example, with the aid of its speed sensor. The route sensor could also comprise a sensor to determine the distance to an obstacle or wall, so that the autonomously movable agricultural vehicle does not move at full speed into the obstacle but, for example, brakes before it. The route sensor could, for example, also comprise a gyroscope.

In one embodiment of the autonomously movable agricultural vehicle, the route sensor comprises a collision sensor to recognize obstacles in the route. If, for example, the autonomously movable agricultural vehicle collides with an obstacle, the collision sensor could designate this obstacle as a recognition point.

In one embodiment of the autonomously movable agricultural vehicle, the control circuit is configured to receive a collision signal from the collision sensor, wherein the control circuit is configured to adapt the information on the storage medium on the basis of the collision signal in accordance with a predefined criterion. An obstacle does not have to be a "permanent" obstacle in the route. The obstacle could, for example, be an animal with which the autonomously movable agricultural vehicle collides. An obstacle of this type should of course not act as a recognition point, given that the animal will not necessarily be present on a subsequent occasion when the autonomously movable agricultural vehicle moves along the route.

In one embodiment of the autonomously movable agricultural vehicle, the predefined criterion is a calibration of the current position. If the autonomously movable agricultural vehicle actually approaches an obstacle along the route, the autonomously movable agricultural vehicle could use this obstacle as a calibration point to determine the exact position of the autonomously movable agricultural vehicle. The collision of the autonomously movable agricultural vehicle could be controllable so that as little energy as possible is lost due to the collision, while a clear calibration of the current position is determined.

In one embodiment of the autonomously movable agricultural vehicle, the predefined criterion is the adjustment of the route if the control circuit receives a collision signal at least twice at more or less the same point along the route. The likelihood of an animal remaining in the same place following a collision with an autonomously movable agricultural vehicle is relatively low. The likelihood of an animal hindering the passage of the autonomously movable agricultural vehicle at the same point along the route is also relatively low. If a collision signal is received twice at more or less the same point along the route, it may be assumed that a "permanent" obstacle is involved and the route could, for example, be adjusted in order to subsequently approach the obstacle in a controlled manner or the route could be adjusted to avoid the obstacle.

In one embodiment of the autonomously movable agricultural vehicle, the predefined criterion is the adjustment of the route if the control circuit receives no collision signal where, according to the storage medium, an obstacle should be present. The obstacle could, for example, be moved or removed, as a result of which the autonomously movable agricultural vehicle could, for example, again move along the original route.

In one embodiment of the autonomously movable agricultural vehicle, the storage medium also comprises information relating to obstacles in the route. Information of this type could, for example, relate to the position in the route, the size of the obstacle and, for example, information indicating when the obstacle was encountered on the route.

In one embodiment of the autonomously movable agricultural vehicle, the autonomously movable agricultural vehicle comprises an ultrasound sensor and/or an optical sensor to recognize obstacles. An optical sensor could be a camera which is mounted on the autonomously movable agricultural vehicle and with which the obstacles can be recognized. The advantage of optical sensors is that they are relatively inexpensive and that image processing can possibly be carried out on the recorded images in order to collect additional information relating to an obstacle. A disadvantage of optical sensors is that agricultural vehicles do not always operate in a clean environment, so that the likelihood of an optical sensor not functioning properly due to dirt is relatively high. As a result, an optical sensor could supply incorrect information to the control circuit. An ultrasound sensor is somewhat less sensitive to contamination, but is somewhat more expensive. The control circuit is, for example, configured to add obstacles in the route to the storage medium if new obstacles are identified by the ultrasound sensor and/or the optical sensor.

In one embodiment of the autonomously movable agricultural vehicle, the control circuit is configured to approach an obstacle in the route in a predefined manner. If the position of an obstacle is known, the obstacle could, for example, be approached at reduced speed, so that the autonomously movable agricultural vehicle is not damaged by the collision. A collision at a lower speed also causes less energy loss than a high-speed collision.

The object is also achieved with the method as described in claims 19 to 22 and is also achieved with the software as described in claim 23.

These and other aspects of the invention are clarified by and will be explained in relation to embodiments described below.
Figure 1 shows a schematic top view of an autonomously movable agricultural vehicle for agricultural applications according to the invention,
Figure 2 shows a schematic top view of a livestock building in which routes are indicated for autonomously movable agricultural vehicles,
Figure 3 shows a schematic representation of a table in which the route is stored together with additional information, and
Figure 4 is a flowchart showing the steps of the method according to the invention.

The figures are schematic and are not drawn to scale. Some of the dimensions are exaggeratedly increased for clarification purposes. Identical elements in the drawings are indicated as far as possible by the same reference numbers.

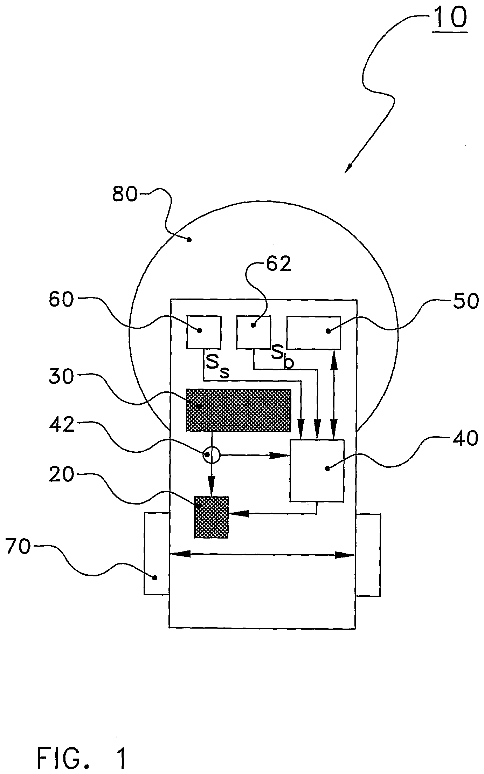

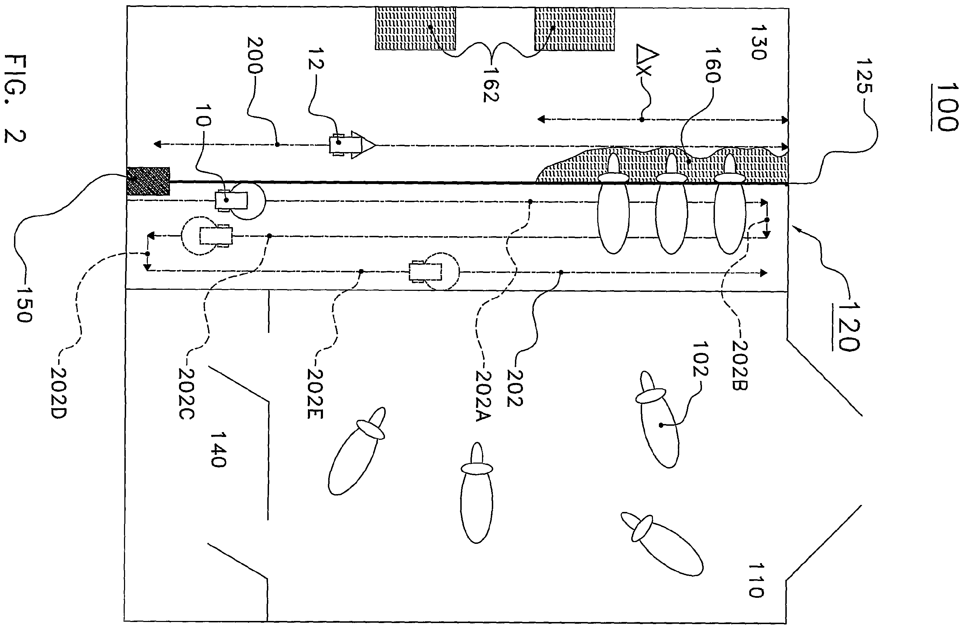

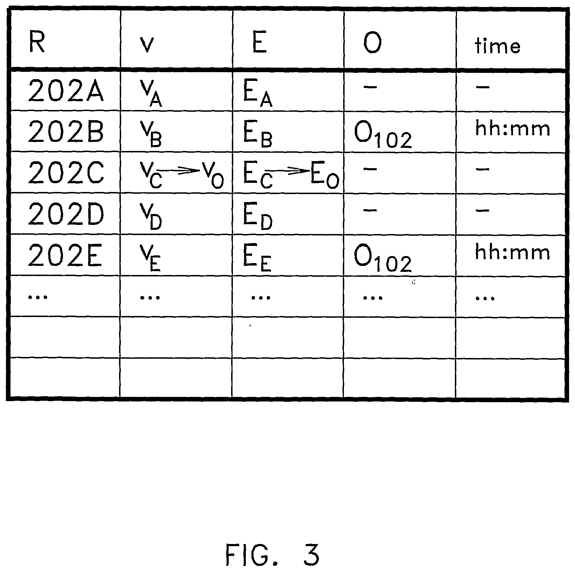

Figure 1 shows a schematic top view of an autonomously movable vehicle 10 for agricultural applications according to the invention. The autonomously movable vehicle 10 for agricultural applications comprises a motor 20 to drive the autonomously movable agricultural vehicle 10 and a battery 30 to supply energy to the motor 20. The autonomously movable agricultural vehicle 10 also comprises a control circuit 40 to drive the motor 20 and to adjust a speed of the autonomously movable agricultural vehicle 10. The control circuit 40 is configured here to set the speed v_{A}, v_{B}, ... (see Figure 3) of the autonomously movable agricultural vehicle 10 in such a way that the energy E_{A}, E_{B}, ... (see Figure 3) drawn from the battery 30 over a predefined distance Δx (see Figure 2) is minimal. The energy available in the battery 30 is thereby used to optimum effect, as a result of which a maximum operating range is achieved with one single battery charge. The energy consumption of the autonomously movable agricultural vehicle 10 is related to the speed v_{A}, v_{B}, ... of the autonomously movable agricultural vehicle 10. The speed v_{A}, v_{B}, ... of the autonomously movable vehicle 10 is adjusted in order to maintain the drawn energy at a low level. If, for example, a defined route 200, 202 (see Figure 2) must be travelled and a part of the route 200, 202 is slippery, the tyres 70 of the autonomously movable agricultural vehicle 10 would have less grip, as a result of which a relatively large amount of energy E_{A}, E_{B}, ... may be lost due to the slipping of the tyres 70. Reducing the speed v_{A}, v_{B}, ... could ensure that the tyres 70 regain a better grip, as a result of which the slipping is reduced and less energy E_{A}, E_{B}, ... is therefore required to travel the same distance Δx. Also, for example, a specific underlying and/or locally uneven surface would require an adjusted speed v_{A}, v_{B}, ... in order to travel the predefined distance Δx with minimal energy E_{A}, E_{B}, ... . By adjusting the speed v_{A}, v_{B}, ... of the autonomously movable agricultural vehicle 10 in such a way that the energy E_{A}, E_{B}, ... drawn from the battery 30 over the predefined distance Δx is always minimal, the total distance travelled for each battery charge can be optimized so that the effectiveness of the autonomously movable agricultural vehicle 10 is also optimal. The predefined distance Δx is then also normally shorter than the total route 200, 202 to be travelled by the autonomously movable agricultural vehicle 10, so that different optimum speeds v_{A}, v_{B}, ... apply to different subsegments 202A, 202B... (see Figure 2) of the total route 200, 202.

The autonomously movable agricultural vehicle 10 comprises, for example, an energy sensor 42 to measure the energy E_{A}, E_{B}, ... drawn from the battery 30. This energy sensor 42 could, for example, measure a current which is drawn from the battery 30. Given that the voltage over a battery 30 is more or less constant, the current drawn provides a measure for the energy drawn from the battery 30. By keeping the time-by-current (t*l) factor as low as possible, the lowest possible consumption is achieved.

The autonomously movable agricultural vehicle 10 as shown in Figure 1 also comprises a storage medium 50. Route information, for example, could be stored on this storage medium 50, comprising instructions for the autonomously movable agricultural vehicle 10 to travel a predefined route 200, 202. This route information could, for example, comprise a predefined speed v_{A}, v_{B}, ... for subsegments 202A, 202B, ..., wherein the energy E_{A}, E_{B}, ... for each subsegment 202A, 202B, ... drawn from the battery 30 is low. In order to create a self-learning system, the control circuit 40 is set up to control the motor 20 during the passage through a defined subsegment 202C with a speed value v₀ which differs from the speed value v_{C} which is stored for the defined subsegment 202C. If the control circuit 40 measures the energy E₀ drawn during the passage through the defined subsegment 202C with the differing speed value v₀ and compares it with the stored energy value E_{C} of the defined subsegment 202C, it is possible to ascertain whether the stored energy value E_{C} is really the minimum energy required in order to pass through the subsegment 202C. If E₀ is lower than the stored E_{C}, the control circuit 40 could be configured to adjust the differing speed value v₀ and/or the energy value E₀ associated with the differing speed value v₀ of the defined subsegment 202C in the storage medium 50.

The autonomously movable agricultural vehicle 10 could also comprise a speed sensor 60 to measure the speed of the autonomously movable agricultural vehicle 10. The speed of the autonomously movable agricultural vehicle 10 does not always match the required speed vₐ, v_{B}, ... which, for example, arises through the control of the motor 20 by the control circuit 40. Many factors in an agricultural environment determine the ultimate speed of the autonomously movable agricultural vehicle 10. For example, the tyres 70 may slip over a part of the floor, as a result of which the required speed vₐ, v_{B}, ... is not achieved. If the actual speed of the autonomously movable agricultural vehicle 10 as measured by the speed sensor 60 does not match the speed v_{A}, v_{B}, ... as set by the control circuit 40, the autonomously movable agricultural vehicle 10 can record this and undertake measures. The speed sensor 60 sends, for example, a speed signal Sₛ to the control circuit 40. The speed signal Sₛ indicates the measured speed. The autonomously movable vehicle 10 could, for example, use the speed signal Sₛ to determine a position of the autonomously movable agricultural vehicle 10 along the route 200, 202. The autonomously movable agricultural vehicle 10 could also comprise a route sensor 62 to determine a recognition point along the route 200, 202. Recognition points of this type could, for example, be calibration points to determine the exact position of the autonomously movable agricultural vehicle 10 within a route 200, 202. A recognition point of this type could preferably comprise a start point and/or end point of a subsegment 202A, 202B. Between the recognition points, the autonomously movable agricultural vehicle 10 could determine the position within the subsegment 202A, 202B, for example, with the aid of its speed sensor 60. The route sensor 62 could also comprise a sensor to determine the distance to an obstacle or wall, so that the autonomously movable agricultural vehicle 10 does not move at full speed into the obstacle but, for example, brakes before it. The route sensor 62 could, for example, also comprise a gyroscope 62. The route sensor 62 could also comprise a sensor to determine the distance to an obstacle or wall, so that the autonomously movable agricultural vehicle 10 does not move at full speed into the obstacle but, for example, brakes before it. The route sensor 62 could, for example, also comprise a gyroscope 62. If the autonomously movable agricultural vehicle 10 collides with an obstacle O₁₀₂, O₁₆₂, the collision sensor 62 could, for example, designate this obstacle O₁₀₂, O₁₆₂ as a recognition point. The information on the storage medium 50 could be adapted here on the basis of a collision signal S_{b} from the collision sensor 62. This adaptation could, for example, be carried out in accordance with a predefined criterion, given that an obstacle O₁₀₂, O₁₆₂ does not of course have to be a "permanent" obstacle O₁₀₂ in the route. The obstacle O₁₀₂ could, for example, be an animal 102 with which the autonomously movable agricultural vehicle 10 collides. An obstacle O₁₀₂ of this type should of course not act as a recognition point, given that the animal 102 will not necessarily be present on a subsequent occasion when the autonomously movable agricultural vehicle 10 moves along the route 200, 202. The obstacle O₁₆₂ could also be a hay bale 162 (see Figure 2) which the farmer has placed for a defined time at a location in the livestock building 100 (see Figure 2). A hay bale 162 of this type could in fact act (temporarily) as a recognition point. The route 200, 202 could, for example, be (temporarily) adjusted to avoid this obstacle O₁₆₂.

The route sensor 62 could, for example, also be an ultrasound sensor 62 and/or an optical sensor 62 to recognize obstacles O₁₀₂, O₁₆₂. An optical sensor 62 could, for example, comprise a camera 62 which is mounted on the autonomously movable agricultural vehicle 10 and with which the obstacles O₁₀₂, O₁₆₂ can be recognized. The advantage of optical sensors 62 is that they are relatively inexpensive and that image processing can possibly be carried out on the recorded images in order to collect additional information relating to an obstacle O₁₀₂, O₁₆₂.

The autonomously movable agricultural vehicle 10 according to Figure 1 could, for example, be a cleaning vehicle 10 which comprises cleaning means 80, for example a rotating brush 80, to clean the floor in a livestock building 100 (see Figure 2). The autonomously movable agricultural vehicle 10 according to Figure 1 could, for example, move autonomously through the livestock buildings or in the field. The autonomously movable agricultural vehicle 10 according to Figure 1 could also, for example, move through the livestock buildings or in the field suspended on a rail system (not shown) or moving on a rail system (not shown). The speed could also be set in an embodiment of this type in such a way that the energy consumption is as low as possible, and the speed can be adjusted according to changing conditions, such as changing load of the autonomously movable agricultural vehicle 10.

Figure 2 shows a schematic top view of a livestock building 100 in which routes 200, 202 are indicated for autonomously movable agricultural vehicles 10, 12. The livestock building 100 could, for example, be configured for cows 102. A livestock building 100 of this type could, for example, contain a rest area 110 for the cows 102 and a feed area 120 for the cows 102. There could also be a work area 130 for the farmer, separated from the feed area 120 by fencing 125. In a work area 130 of this type, a farmer can offer feed 160 to the cows 102 and stored feed 162 can be stored in the form of hay bales 162, ready for use. A first autonomously movable agricultural vehicle 12 could, for example, travel a first route 200 in order to offer feed 160 always close to the cows 102. The first route 200 is indicated in Figure 2 by a dashed-dotted line. A second autonomously movable agricultural vehicle 10 could, for example, travel a second route 202 in order to keep the feed area 120 clean. The second route 202 is indicated in Figure 2 by a dashed-double-dotted line. A charging station 150 is available to both autonomously movable agricultural vehicles 10, 12, and can be accessed from both the work area 130 and from the feed area 120. The livestock building 100 could comprise further areas, such as a milking area 140 etc.

For the first autonomously movable agricultural vehicle 12, a predefined distance Δx is indicated, wherein the load of the first autonomously movable agricultural vehicle 12 will differ from the load of the first autonomously movable agricultural vehicle 12 for the remainder of the first route 200. It is to be expected that the speed at which the minimum energy is drawn from the battery 30 in the predefined distance Δx will differ from the speed in the remainder of the first route 200.

The routes 200, 202 as shown in Figure 2 are travelled several times a day by the autonomously movable agricultural vehicles 10, 12. It is then also possible to measure and minimize the energy consumption along the route 200, 202. To do this, for example, the storage medium 50 (see Figure 1) could store historical data relating to the travelled route 200, 202. These historical data could, for example, comprise information from an earlier move along the route 200, 202 by the autonomously movable agricultural vehicle 10, 12. The historical data could, for example, comprise the total energy consumption along the route 200, 202. The historical data could, for example, also comprise specific energy consumption E_{A}, E_{B}, ... in subsegments 202A, 202B... of the route 202. The historical data could also comprise information relating to changed conditions, such as an animal 102 which is located on the planned route 202 and has not moved aside. The autonomously movable agricultural vehicle 10 will then collide with the animal 102 and will be able to regard this "obstacle" O₁₀₂ as a historical datum. Given that the autonomously movable agricultural vehicle 10 cannot usually determine whether an obstacle in the route 200, 202 is an "incidental" obstacle O₁₀₂ or a new "permanent" obstacle O₁₆₂, the autonomously movable agricultural vehicle 10 will be able, for example, to move more slowly at the relevant point along the route 200, 202 on a subsequent occasion when it passes along the route 200, 202 in order to ascertain whether the obstacle was in fact an "incidental" obstacle O₁₀₂.

Figure 3 shows a schematic representation of a table in which the route 202 is stored together with additional information. The table is, for example, stored on the storage medium 50 (see Figure 1). The route 202 is, for example, divided up into subsegments 202A, 202B, ..., wherein the table, on the storage medium 50 for each subsegment 202A, 202B..., comprises an associated speed value v_{A}, v_{B}, ... for the autonomously movable agricultural vehicle 10. The table could, for example, comprise additional information, such as the length of the subsegment (not indicated in the table shown), the time required to pass through the subsegment (indicated by "time") and the consumed quantity of energy E_{A}, E_{B}, ... drawn from the battery 30 during the passage through the subsegment 202A, 202B. The table could also, for example, comprise historical data in order, for example, to record local anomalies, so that the autonomously movable agricultural vehicle 10 could anticipate the local anomalies. This local anomaly could, for example, comprise an obstacle O₁₀₂. As a result, for example, the division of the route 202 into subsegments 202A, 202B could be revised and/or the speed value v_{A}, v_{B}, ... associated with a subsegment 202A, 202B could be adjusted.

The stored energy value E_{A}, E_{B}, ... is, for example, one of the historical values which was measured during a previous passage along the route 202. The stored energy values E_{A}, E_{B}, ... could, for example, also be used to determine whether the route 202 can still be travelled with the amount of energy available in the battery 30, given that the stored energy values E_{A}, E_{B}, ... can be used to predict how much energy is required to pass through the subsegments 202A, 202B, .... The autonomously movable agricultural vehicle 10 could thus determine whether the route 202 can be travelled once more, or whether the journey must be interrupted halfway in order to visit the charging station 150.

The control circuit 40 could also be configured to control the motor 20 during the passage through a defined subsegment 202C with a speed value v₀ which differs from the speed value v_{C} which is stored for the defined subsegment 202C (indicated in the table by an arrow). The control circuit 40 could, for example, then measure the energy E₀ drawn during the passage through the defined subsegment 202C with the differing speed value v₀ and could compare it with the stored energy value E_{C} of the defined subsegment 202C.

The passage through a defined subsegment 202A, 202B, ... with a differing speed value v₀ could, for example, be initiated because an increased required energy is measured for a defined subsegment 202C in comparison with the stored energy E_{C}. Increased required energy of this type could indicate that the conditions for the autonomously movable agricultural vehicle 10 have changed and that a differing speed value v₀ would perhaps be necessary in order to pass through the subsegment 202C with minimal energy under these differing conditions. The autonomously movable agricultural vehicle 10 could then, for example, be configured to adjust the differing speed value v₀ and/or the energy value E₀ associated with the differing speed value v₀ of the defined subsegment 202C in the storage medium 50 (indicated by the arrow). The information relating to obstacles O₁₀₂ could also be adjusted.

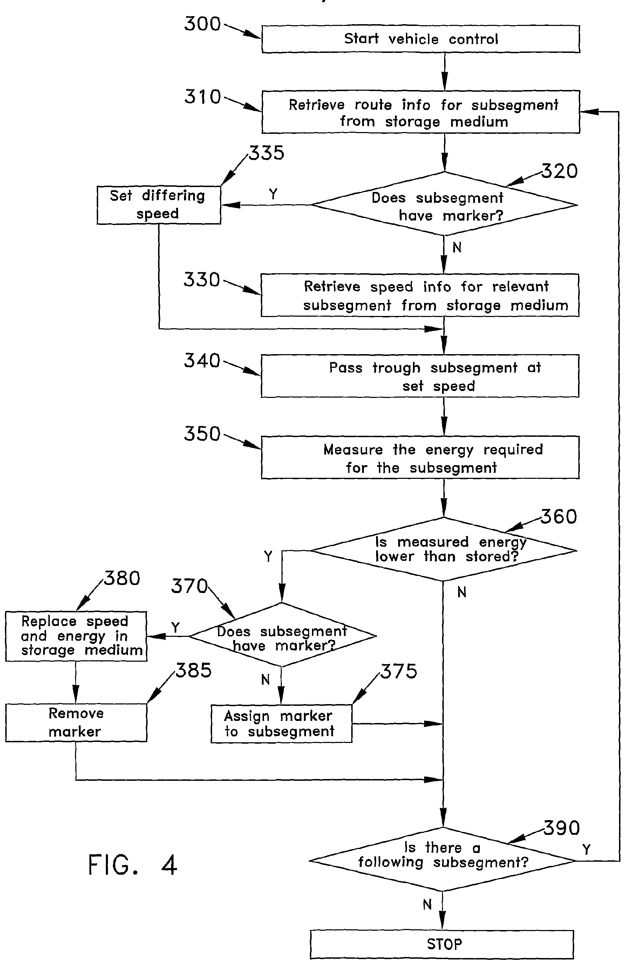

Figure 4 is a flowchart showing the steps of the method according to the invention. The method starts with step 300 "Start vehicle control", after which the route information for the subsegment 202A, 202B, ... of the route 202 to be travelled is retrieved from the storage medium 50 (see Figure 1) in step 310 "Retrieve route info for subsegment from storage medium". A part of this route information indicates whether the subsegment 202A, 202B, ... comprises a marker in the route information. A marker is used to indicate that, for example, during a passage through the relevant subsegment 202A, 202B, ... on a previous occasion, the measured energy differs from the energy E_{A}, E_{B}, ... stored for the relevant subsegment 202A, 202B, ... or that during the passage through the relevant subsegment 202A, 202B, ... an unexpected obstacle O₁₀₂, O₁₆₂ was detected. As already indicated above, the fact that the measured energy differs from the stored energy E_{A}, E_{B}, ... could indicate that the conditions for passing through the relevant subsegment 202A, 202B, ... have changed and that a differing optimum speed v₀ could exist at which less energy E₀ is consumed than the stored energy E_{A}, E_{B}, ... for the current stored speeds v_{A}, v_{B}, .... In step 320 "Does subsegment have marker?", the presence of a marker of this type is investigated. If the marker is present Y, a differing speed v₀ is set in step 335 "Set differing speed" in order to travel through the relevant subsegment 202A, 202B, .... If the marker is not present N, the speed information v_{A}, v_{B}, ... associated with the relevant subsegment 202A, 202B, ... is retrieved from the storage medium 50 in step 330 "Retrieve speed info for relevant subsegment from storage medium". Then, in step 340 "Pass through subsegment at set speed", the subsegment 202A, 202B, ... is passed through at the set speed v_{A}, v_{B} .... During the passage through the subsegment 202A, 202B, ... at the set speed v_{A}, v_{B}, ..., the energy drawn from the battery 30 is measured in step 350 "Measure the energy required for the subsegment". It is then ascertained whether the measured energy for the passage through the subsegment 202A, 202B, ... is lower than the stored energy E_{A}, E_{B}, ... associated with the relevant subsegment 202A, 202B, ... in step 360 "Is measured energy lower than stored?". If the measured energy is lower than the stored energy E_{A}, E_{B}, ... Y, it is ascertained whether the relevant subsegment 202A, 202B, ... comprises a marker in step 370 "Does subsegment have marker?". If the answer is again affirmative Y, the speed and energy as stored on the storage medium 50 are replaced with the differing speed v₀ and the associated energy E₀ in step 380 "Replace speed and energy in storage medium". The marker is then removed in step 385 "Remove marker", after which it is ascertained whether a following subsegment 202A, 202B, ... must also be passed through in step 390 "Is there a following subsegment?". If the relevant subsegment 202A, 202B, ... has no marker and the question in step 370 is answered negatively N, a marker is assigned to the relevant subsegment 202A, 202B, ... in step 375 "Assign marker to subsegment", after which it is ascertained whether a following subsegment 202A, 202B, ... must also be passed through in step 390. By assigning a marker to the relevant subsegment 202A, 202B, ..., it is ensured that, when the relevant subsegment 202A, 202B, ... is passed through on a subsequent occasion, a differing speed is selected according to step 335 to see whether further optimization of the speed results in less energy consumption.

If the energy measured during the passage through the subsegment 202A, 202B, ... is not lower than the stored energy, i.e. if the answer to the question in step 360 is negative N, it is ascertained whether a following subsegment 202A, 202B, ... must be also passed through in step 390. If the answer to the question in step 390 is affirmative Y, and a following subsegment 202A, 202B, ... must be passed through, the method returns to step 310 and retrieves the route information for the relevant subsegment 202A, 202B, ... which must then be passed through, after which the method will be repeated. If the answer to the question in step 390 is negative N, the method stops.

In a similar manner, the changing of the route 200, 202 could also be carried out through changes in the obstacles O₁₆₂, O₁₀₂ in the route 200, 202 and the relevant route 200, 202 or the relevant subsegment 202A, 202B, ... of the route 200, 202 could be adjusted.

## Claims

1. An autonomously movable agricultural vehicle (10, 12) for agricultural applications, wherein the autonomously movable agricultural vehicle (10, 12) comprises a motor (20) to drive the autonomously movable agricultural vehicle (10, 12), and comprises a battery (30) to supply energy to the motor (20), and wherein the autonomously movable agricultural vehicle (10, 12) comprises a control circuit (40) to control the motor (20) to adjust a speed of the autonomously movable agricultural vehicle (10, 12), **characterised in that** the control circuit (40) is configured to set the speed (v_{A}, v_{B}, ...) of the autonomously movable agricultural vehicle (10, 12), such that the energy (E_{A}, E_{B}, ...) drawn from the battery (30) over a predefined distance (Δx) is minimal and **in that** the autonomously movable agricultural vehicle (10, 12) comprises a storage medium (50) to store route information which comprises instructions for the autonomously movable agricultural vehicle (10, 12) to move along a predefined route (200, 202), and wherein the control circuit (40) is configured to determine the energy drawn from the battery (30) over the predefined distance (Δx) along the route (200, 202), and wherein the storage medium (50) comprises the route (200, 202) divided up into subsegments (202A, 202B, ...), and wherein the storage medium (50) comprises a speed value (v_{A}, v_{B}, ...) for the autonomously movable agricultural vehicle (10, 12) for each subsegment (202A, 202B...) and wherein the storage medium (50) also comprises an energy value (E_{A}, E_{B}, ...) for each subsegment (202A, 202B, ...), wherein the energy value (E_{A}, E_{B}, ...) represents the energy which is required if the subsegment (202A, 202B, ...) is passed through with the associated speed value (v_{A}, v_{B}, ...) and wherein the control circuit (40) is configured to control the motor (20) during the passage through a defined subsegment (202C) with a speed value (v₀) which differs from the speed value (v_{C}) which is stored for the defined subsegment (202C), and wherein the control circuit (40) is configured to measure the energy (E₀) drawn during the passage through the defined subsegment (202C) with the differing speed value (v₀) and to compare it with the stored energy value (E_{C}) of the defined subsegment (202C).

2. Autonomously movable agricultural vehicle (10, 12) according to claim 1, wherein the autonomously movable agricultural vehicle (10, 12) comprises an energy sensor (42) to measure the energy (E₀) drawn from the battery (30).

3. Autonomously movable agricultural vehicle (10, 12) according to claim 2, wherein the energy sensor (42) is configured to measure the current which is drawn from the battery (30).

4. Autonomously movable agricultural vehicle (10, 12) according to claim 1, wherein the autonomously movable agricultural vehicle (10, 12) is configured to store historical data relating to the travelled route (200, 202) on the storage medium (50), wherein the historical data comprise information relating to a previous passage along the route (200, 202) by the autonomously movable agricultural vehicle (10, 12).

5. Autonomously movable agricultural vehicle (10, 12) according to claim 1, wherein the control circuit (40) is configured to adjust the differing speed value (v₀) and/or the energy value (E₀) associated with the differing speed value (v₀) of the defined subsegment (202C) in the storage medium (50) if the energy consumption (E₀) during the differing speed value (v₀) is lower than the energy value (E_{C}) stored in the storage medium (50).

6. Autonomously movable agricultural vehicle (10, 12) according to one of the preceding claims, wherein the autonomously movable agricultural vehicle (10, 12) comprises a speed sensor (60) to measure the speed of the autonomously movable agricultural vehicle (10, 12).

7. Autonomously movable agricultural vehicle (10, 12) according to claim 6, wherein the control circuit (40) receives a speed signal (Sₛ) from the speed sensor (60) which indicates the measured speed, and wherein the control circuit (40) uses the speed signal (Sₛ) to determine a position of the autonomously movable agricultural vehicle (10, 12) along the route (200, 202).

8. Autonomously movable agricultural vehicle (10, 12) according to one of the preceding claims, wherein the autonomously movable agricultural vehicle (10, 12) comprises a route sensor (62) to determine a recognition point along the route (200, 202).

9. Autonomously movable agricultural vehicle (10, 12) according to claim 8, wherein the route sensor (62) comprises a collision sensor (62) to recognize obstacles (O₁₀₂, O₁₆₂) on the route (200, 202).

10. Autonomously movable agricultural vehicle (10, 12) according to claim 9, wherein the control circuit (40) is configured to receive a collision signal (S_{b}) from the collision sensor (62), and wherein the control circuit (40) is configured to adapt the information on the storage medium (50) on the basis of the collision signal (S_{b}) in accordance with a predefined criterion.

11. Autonomously movable agricultural vehicle (10, 12) according to claim 10, wherein the predefined criterion:
- is a calibration of the current position, and/or
- the adjustment of the route (200, 202) if the control circuit (40) receives a collision signal (S_{b}) at least twice at more or less the same point along the route (200, 202), and/or
- the adjustment of the route (200, 202) if the control circuit (40) receives no collision signal (S_{b}) where, according to the storage medium (50), an obstacle (O₁₀₂, O₁₆₂) should be present.

12. Autonomously movable agricultural vehicle (10, 12) according to one of claims 1 to 11, wherein the storage medium (50) comprises information relating to obstacles (O₁₀₂, O₁₆₂) in the route (200, 202).

13. Autonomously movable agricultural vehicle (10, 12) according to one of claims 1 to 12, wherein the autonomously movable agricultural vehicle (10, 12) comprises an ultrasound sensor (62) and/or an optical sensor (62) to recognize obstacles (O₁₀₂, O₁₆₂).

14. Autonomously movable agricultural vehicle (10, 12) according to claim 12 or 13, wherein the control circuit (40) is configured to approach the obstacle (O₁₀₂, O₁₆₂) in the route (200, 202) in a predefined manner.

15. Method for controlling an autonomously movable agricultural vehicle (10, 12) for agricultural applications, wherein the autonomously movable agricultural vehicle (10, 12) comprises a motor (20) to drive the autonomously movable agricultural vehicle (10, 12) and a battery (30) to supply energy to the motor (20), and wherein the autonomously movable agricultural vehicle (10, 12) comprises a control circuit (40), wherein the method comprises the step:
- the adjustment of a speed (v_{A}, v_{B}, ...) of the autonomously movable agricultural vehicle (10, 12), wherein the energy (E_{A}, E_{B}...) drawn from the battery (30) over a predefined distance (Δx) is minimal, and wherein the method comprises the step:
- the measurement of the energy (E₀) drawn from the battery (30) over the predefined distance (Δx), and wherein the autonomously movable agricultural vehicle (10, 12) comprises a storage medium (50) to store route information, wherein the route (200, 202) is divided up into subsegments (202A, 202B, ...) with a speed value (v_{A}, v_{B}, ...) for each subsegment (202A, 202B, ...) for the autonomously movable agricultural vehicle (10, 12) and an energy value (E_{A}, E_{B}, ...) which represents the amount of energy which is required if the subsegment (202A, 202B, ...) is passed through with the associated speed value (v_{A}, v_{B}, ...), wherein the method comprises the step:
- the comparison of the measured energy (E₀) drawn from the battery (30) during the passage through a defined subsegment (202C) with the stored energy value (Ec) for the relevant subsegment (202C).

16. Method according to claim 15, wherein the method comprises the steps:
- the setting of a differing speed (v₀) of the autonomously movable agricultural vehicle (10, 12) which differs from the stored speed (v_{C}) for the relevant subsegment (202C), and
- the comparison of the measured energy (E₀) drawn from the battery (30) during the passage through the relevant subsegment (202C) with the stored energy value (E_{C}) for the relevant subsegment (202C), and
- the replacement of the stored speed value (v_{C}) with the differing speed value (v₀) and/or the replacement of the stored energy value (E₀) with the measured energy (E_{C}) if the measured energy (E₀) during the differing speed value (v₀) is lower than the energy value (E_{C}) stored in the storage medium (50).

17. Software for managing an autonomously movable agricultural vehicle (10; 12), wherein the software is configured to control the autonomously movable agricultural vehicle (10; 12) so that the autonomously movable agricultural vehicle (10; 12) carries out the method steps according to claims 15 to 16.

## Patentansprüche

1. Autonom bewegliches landwirtschaftliches Fahrzeug (10, 12) für landwirtschaftliche Anwendungen, wobei das autonom bewegliche landwirtschaftliche Fahrzeug (10, 12) einen Motor (20) aufweist, um das autonom bewegliche landwirtschaftliche Fahrzeug (10, 12) anzutreiben, und eine Batterie (30) aufweist, um den Motor (20) mit Energie zu versorgen, und wobei das autonom bewegliche landwirtschaftliche Fahrzeug (10, 12) eine Steuerschaltung (40) aufweist, um den Motor (20) zu steuern, um eine Geschwindigkeit des autonom beweglichen landwirtschaftlichen Fahrzeugs (10, 12) festzulegen, **dadurch gekennzeichnet, dass** die Steuerschaltung (40) konfiguriert ist, die Geschwindigkeit (v_{A}, v_{B}, ...) des autonom beweglichen landwirtschaftlichen Fahrzeugs (10, 12) so einzustellen, dass die Energie (E_{A}, E_{B}, ...), die aus der Batterie (30) über eine vordefinierte Entfernung (Δx) entnommen wird, minimal ist, und dass das autonom bewegliche landwirtschaftliche Fahrzeug (10, 12) ein Speichermedium (50) aufweist, um Fahrstreckeninformationen zu speichern, die Anweisungen für das autonom bewegliche landwirtschaftliche Fahrzeug (10, 12) aufweisen, sich längs einer vordefinierten Fahrstrecke (200, 202) zu bewegen, und wobei die Steuerschaltung (40) konfiguriert ist, die Energie festzustellen, die aus der Batterie (30) über die vordefinierte Entfernung (Δx) längs der Fahrstrecke (200, 202) entnommen wird, und wobei das Speichermedium (50) die in Teilsegmente (202A, 202B, ...) aufgeteilte Fahrstrecke (200, 202) aufweist, und wobei das Speichermedium (50) einen Geschwindigkeitswert (v_{A}, v_{B}, ...) für das autonom bewegliche landwirtschaftliche Fahrzeug (10, 12) für jedes Teilsegment (202A, 202B...) aufweist und wobei das Speichermedium (50) außerdem einen Energiewert (E_{A}, E_{B}, ...) für jedes Teilsegment (202A, 202B, ...) aufweist, wobei der Energiewert (E_{A}, E_{B}, ...) die Energie repräsentiert, die benötigt wird, wenn das Teilsegment (202A, 202B, ...) mit dem zugehörigen Geschwindigkeitswert (v_{A}, v_{B}, ...) durchfahren wird, und wobei die Steuerschaltung (40) konfiguriert ist, den Motor (20) während der Durchfahrt durch ein definiertes Teilsegment (202C) mit einem Geschwindigkeitswert (v₀) zu steuern, der sich von dem Geschwindigkeitswert (v_{C}) unterscheidet, der für das definierte Teilsegment (202C) gespeichert ist, und wobei die Steuerschaltung (40) konfiguriert ist, die Energie (E₀) zu messen, die während der Durchfahrt durch das definierte Teilsegment (202C) mit dem unterschiedlichen Geschwindigkeitswert (v₀) entnommen wird, und sie mit dem gespeicherten Energiewert (E_{C}) des definierten Teilsegments (202C) zu vergleichen.

2. Autonom bewegliches landwirtschaftliches Fahrzeug (10, 12) nach Anspruch 1, wobei das autonom bewegliche landwirtschaftliche Fahrzeug (10, 12) einen Energiesensor (42) aufweist, um die Energie (E₀) zu messen, die aus der Batterie (30) entnommen wird.

3. Autonom bewegliches landwirtschaftliches Fahrzeug (10, 12) nach Anspruch 2, wobei der Energiesensor (42) konfiguriert ist, den Strom zu messen, der aus der Batterie (30) entnommen wird.

4. Autonom bewegliches landwirtschaftliches Fahrzeug (10, 12) nach Anspruch 1, wobei das autonom bewegliche landwirtschaftliche Fahrzeug (10, 12) konfiguriert ist, historische Daten, die die durchfahrene Fahrstrecke (200, 202) betreffen, auf dem Speichermedium (50) zu speichern, wobei die historischen Daten Informationen aufweisen, die eine vorhergehende Durchfahrt längs der Fahrstrecke (200, 202) durch das autonom bewegliche landwirtschaftliche Fahrzeug (10, 12) betreffen.

5. Autonom bewegliches landwirtschaftliches Fahrzeug (10, 12) nach Anspruch 1, wobei die Steuerschaltung (40) konfiguriert ist, den unterschiedlichen Geschwindigkeitswert (v₀) und/oder den Energiewert (E₀) einzustellen, der mit dem unterschiedlichen Geschwindigkeitswert (v₀) des definierten Teilsegments (202C) im Speichermedium (50) verbunden ist, wenn der Energieverbrauch (E₀) während des unterschiedlichen Geschwindigkeitswerts (v₀) niedriger als der im Speichermedium (50) gespeicherte Energiewert (E_{C}) ist.

6. Autonom bewegliches landwirtschaftliches Fahrzeug (10, 12) nach einem der vorhergehenden Ansprüche, wobei das autonom bewegliche landwirtschaftliche Fahrzeug (10, 12) einen Geschwindigkeitssensor (60) aufweist, um die Geschwindigkeit des autonom beweglichen landwirtschaftlichen Fahrzeugs (10, 12) zu messen.

7. Autonom bewegliches landwirtschaftliches Fahrzeug (10, 12) nach Anspruch 6, wobei die Steuerschaltung (40) ein Geschwindigkeitssignal (Sₛ) vom Geschwindigkeitssensor (60) empfängt, das die gemessene Geschwindigkeit anzeigt, und wobei die Steuerschaltung (40) das Geschwindigkeitssignal (Sₛ) verwendet, um eine Position des autonom beweglichen landwirtschaftlichen Fahrzeugs (10, 12) längs der Fahrstrecke (200, 202) festzustellen.

8. Autonom bewegliches landwirtschaftliches Fahrzeug (10, 12) nach einem der vorhergehenden Ansprüche, wobei das autonom bewegliche landwirtschaftliche Fahrzeug (10, 12) einen Fahrstreckensensor (62) aufweist, um einen Erkennungspunkt längs der Fahrstrecke (200, 202) festzustellen.

9. Autonom bewegliches landwirtschaftliches Fahrzeug (10, 12) nach Anspruch 8, wobei der Fahrstreckensensor (62) einen Kollisionssensor (62) aufweist, um Hindernisse (O₁₀₂, O₁₆₂) auf der Fahrstrecke (200, 202) zu erkennen.

10. Autonom bewegliches landwirtschaftliches Fahrzeug (10, 12) nach Anspruch 9, wobei die Steuerschaltung (40) konfiguriert ist, ein Kollisionssignal (S_{b}) vom Kollisionssensor (62) zu empfangen, und wobei die Steuerschaltung (40) konfiguriert ist, die Informationen auf dem Speichermedium (50) auf der Grundlage des Kollisionssignals (S_{b}) in Übereinstimmung mit einen vordefinierten Kriterium anzupassen.

11. Autonom bewegliches landwirtschaftliches Fahrzeug (10, 12) nach Anspruch 10, wobei das vordefinierte Kriterium Folgendes ist:
- eine Kalibrierung der gegenwärtigen Position, und/oder
- die Einstellung der Fahrstrecke (200, 202), wenn die Steuerschaltung (40) mindestens zweimal an mehr oder weniger demselben Punkt längs der Fahrstrecke (200, 202) ein Kollisionssignal (S_{b}) empfängt, und/oder
- die Einstellung der Fahrstrecke (200, 202), wenn die Steuerschaltung (40) kein Kollisionssignal (S_{b}) empfängt, wo gemäß dem Speichermedium (50) ein Hindernis (O₁₀₂, O₁₆₂) vorhanden sein sollte.

12. Autonom bewegliches landwirtschaftliches Fahrzeug (10, 12) nach einem der Ansprüche 1 bis 11, wobei das Speichermedium (50) Informationen aufweist, die Hindernisse (O₁₀₂, O₁₆₂) in der Fahrstrecke (200, 202) betreffen.

13. Autonom bewegliches landwirtschaftliches Fahrzeug (10, 12) nach einem der Ansprüche 1 bis 12, wobei das autonom bewegliche landwirtschaftliche Fahrzeug (10, 12) einen Ultraschallsensor (62) und/oder einen optischen Sensor (62) aufweist, um Hindernisse (O₁₀₂, O₁₆₂) zu erkennen.

14. Autonom bewegliches landwirtschaftliches Fahrzeug (10, 12) nach Anspruch 12 oder 13, wobei die Steuerschaltung (40) konfiguriert ist, sich dem Hindernis (O₁₀₂, O₁₆₂) in der Fahrstrecke (200, 202) in einer vordefinierten Weise zu nähern.

15. Verfahren zum Steuern eines autonom beweglichen landwirtschaftlichen Fahrzeugs (10, 12) für landwirtschaftliche Anwendungen, wobei das autonom bewegliche landwirtschaftliche Fahrzeug (10, 12) einen Motor (20), um das autonom bewegliche landwirtschaftliche Fahrzeug (10, 12) anzutreiben, und eine Batterie (30), um den Motor (20) mit Energie zu versorgen, aufweist und wobei das autonom bewegliche landwirtschaftliche Fahrzeug (10, 12) eine Steuerschaltung (40) aufweist, wobei das Verfahren den folgenden Schritt aufweist:
- die Einstellung einer Geschwindigkeit (v_{A}, v_{B}, ...) des autonom beweglichen landwirtschaftlichen Fahrzeugs (10, 12), wobei die Energie (E_{A}, E_{B}...), die aus der Batterie (30) über eine vordefinierte Entfernung (Δx) entnommen wird, minimal ist, und wobei das Verfahren den folgenden Schritt aufweist:
- die Messung der Energie (E₀), die aus der Batterie (30) über die vordefinierte Entfernung (Δx) entnommen wird, und wobei das autonom bewegliche landwirtschaftliche Fahrzeug (10, 12) ein Speichermedium (50) aufweist, um Fahrstreckeninformationen zu speichern, wobei die Fahrstrecke (200, 202) in Teilsegmente (202A, 202B, ...) mit einem Geschwindigkeitswert (v_{A}, v_{B}, ...) für jedes Teilsegment (202A, 202B, ...) für das autonom bewegliche landwirtschaftliche Fahrzeug (10, 12) und einen Energiewert (E_{A}, E_{B}, ...) aufgeteilt ist, der die Energiemenge repräsentiert, die benötigt wird, wenn das Teilsegment (202A, 202B, ...) mit dem zugehörigen Geschwindigkeitswert (v_{A}, v_{B}, ...) durchfahren wird, wobei das Verfahren den folgenden Schritt aufweist:
- den Vergleich der gemessenen Energie (E₀), die aus der Batterie (30) während der Durchfahrt durch ein definiertes Teilsegment (202C) entnommen wird, mit dem gespeicherten Energiewert (E_{C}) für das maßgebliche Teilsegment (202C).

16. Verfahren nach Anspruch 15, wobei das Verfahren die folgenden Schritte aufweist:
- das Festlegen einer unterschiedlichen Geschwindigkeit (v₀) des autonom beweglichen landwirtschaftlichen Fahrzeugs (10, 12), die sich von der gespeicherten Geschwindigkeit (v_{C}) für das maßgebliche Teilsegment (202C) unterscheidet, und
- den Vergleich der gemessenen Energie (E₀), die aus der Batterie (30) während der Durchfahrt durch das maßgebliche Teilsegment (202C) entnommen wird, mit dem gespeicherten Energiewert (E_{C}) für das maßgebliche Teilsegment (202C), und
- das Ersetzen des gespeicherten Geschwindigkeitswerts (v_{C}) durch den unterschiedlichen Geschwindigkeitswert (v₀) und/oder das Ersetzen des gespeicherten Energiewerts (E₀) durch die gemessene Energie (E_{C}), wenn die gemessene Energie (E₀) während des unterschiedlichen Geschwindigkeitswerts (v₀) niedriger als der im Speichermedium (50) gespeicherte Energiewert (E_{C}) ist.

17. Software zum Verwalten eines autonom beweglichen landwirtschaftlichen Fahrzeugs (10; 12), wobei die Software konfiguriert ist, das autonom bewegliche landwirtschaftliche Fahrzeug (10; 12) so zu steuern, dass das autonom bewegliche landwirtschaftliche Fahrzeug (10; 12) die Verfahrensschritte nach den Ansprüchen 15 bis 16 ausführt.

## Revendications

1. Véhicule agricole pouvant se déplacer de manière autonome (10, 12) pour des applications agricoles, dans lequel le véhicule agricole pouvant se déplacer de manière autonome (10, 12) comprend un moteur (20) pour entraîner le véhicule agricole pouvant se déplacer de manière autonome (10, 12), et comprend une batterie (30) pour fournir de l'énergie au moteur (20), et dans lequel le véhicule agricole pouvant se déplacer de manière autonome (10, 12) comprend un circuit de commande (40) pour commander le moteur (20) afin de régler la vitesse du véhicule agricole pouvant se déplacer de manière autonome (10, 12), **caractérisé en ce que** le circuit de commande (40) est configuré de manière à régler la vitesse (V_{A}, V_{B}, ...) du véhicule agricole pouvant se déplacer de manière autonome (10, 12) de telle sorte que l'énergie (E_{A}, E_{B}, ...) puisée dans la batterie (30) sur une distance prédéfinie (Δx) soit minimale, et **en ce que** le véhicule agricole pouvant se déplacer de manière autonome (10, 12) comprend un support de stockage (50) pour stocker des instructions d'itinéraire qui comprennent des instructions pour que le véhicule agricole pouvant se déplacer de manière autonome (10, 12) se déplace le long d'un itinéraire prédéfini (200, 202), et dans lequel le circuit de commande (40) est configuré de manière à déterminer l'énergie puisée dans la batterie (30) sur la distance prédéfinie (Δx) le long de l'itinéraire (200, 202), et dans lequel le support de stockage (50) comprend l'itinéraire (200, 202) divisé en sous-segments (202A, 202B, ...), et dans lequel le support de stockage (50) comprend une valeur de vitesse (V_{A}, V_{B}, ...) pour le véhicule agricole pouvant se déplacer de manière autonome (10, 12) pour chaque sous-segment (202A, 202B, ...), et dans lequel le support de stockage (50) comprend également une valeur d'énergie (E_{A}, E_{B}, ...) pour chaque sous-segment (202A, 202B, ...), dans lequel la valeur d'énergie (E_{A}, E_{B}, ...) représente l'énergie qui est requise si le sous-segment (202A, 202B, ...) est parcouru avec la valeur de vitesse associée (V_{A}, V_{B}, ...), et dans lequel le circuit de commande (40) est configuré de manière à commander le moteur (20) pendant le passage à travers un sous-segment défini (202C) avec une valeur de vitesse (V₀) qui diffère de la valeur de vitesse (V_{C}) qui est stockée pour le sous-segment défini (202C), et dans lequel le circuit de commande (40) est configuré de manière à mesurer l'énergie (E₀) puisée pendant le passage à travers le sous-segment défini (202C) avec la valeur de vitesse différente (V₀) et à la comparer avec la valeur d'énergie stockée (E_{C}) du sous-segment défini (202C).

2. Véhicule agricole pouvant se déplacer de manière autonome (10, 12) selon la revendication 1, dans lequel le véhicule agricole pouvant se déplacer de manière autonome (10, 12) comprend un capteur d'énergie (42) pour mesurer l'énergie (E₀) puisée dans la batterie (30).

3. Véhicule agricole pouvant se déplacer de manière autonome (10, 12) selon la revendication 2, dans lequel le capteur d'énergie (42) est configuré de manière à mesurer le courant qui est puisé dans la batterie (30).

4. Véhicule agricole pouvant se déplacer de manière autonome (10, 12) selon la revendication 1, dans lequel le véhicule agricole pouvant se déplacer de manière autonome (10, 12) est configuré de manière à stocker des données historiques relatives à l'itinéraire parcouru (200, 202) sur le support de stockage (50), dans lequel les données historiques comprennent des informations relatives à un passage précédent le long de l'itinéraire (200, 202) par le véhicule agricole pouvant se déplacer de manière autonome (10, 12).

5. Véhicule agricole pouvant se déplacer de manière autonome (10, 12) selon la revendication 1, dans lequel le circuit de commande (40) est configuré de manière à régler la valeur de vitesse différente (V₀) et/ou la valeur d'énergie (E₀) associée à la valeur de vitesse différente (V₀) du sous-segment défini (202C) dans le support de stockage (50) si la consommation d'énergie (E₀) pendant la valeur de vitesse différente (V₀) est inférieure à la valeur d'énergie (E_{C}) stockée dans le support de stockage (50).

6. Véhicule agricole pouvant se déplacer de manière autonome (10, 12) selon l'une des revendications précédentes, dans lequel le véhicule agricole pouvant se déplacer de manière autonome (10, 12) comprend un capteur de vitesse (60) pour mesurer la vitesse du véhicule agricole pouvant se déplacer de manière autonome (10, 12).

7. Véhicule agricole pouvant se déplacer de manière autonome (10, 12) selon la revendication 6, dans lequel le circuit de commande (40) reçoit un signal de vitesse (Sₛ) en provenance du capteur de vitesse (60) qui indique la vitesse mesurée, et dans lequel le circuit de commande (40) utilise le signal de vitesse (Sₛ) pour déterminer une position du véhicule agricole pouvant se déplacer de manière autonome (10, 12) le long de l'itinéraire (200, 202).

8. Véhicule agricole pouvant se déplacer de manière autonome (10, 12) selon l'une des revendications précédentes, dans lequel le véhicule agricole pouvant se déplacer de manière autonome (10, 12) comprend un capteur d'itinéraire (62) pour déterminer un point de reconnaissance le long de l'itinéraire (200, 202).

9. Véhicule agricole pouvant se déplacer de manière autonome (10, 12) selon la revendication 8, dans lequel le capteur d'itinéraire (62) comprend un capteur de collision (62) pour identifier des obstacles (O₁₀₂, O₁₆₂) sur l'itinéraire (200, 202).

10. Véhicule agricole pouvant se déplacer de manière autonome (10, 12) selon la revendication 9, dans lequel le circuit de commande (40) est configuré de manière à recevoir un signal de collision (S_{b}) en provenance du capteur de collision (62), et dans lequel le circuit de commande (40) est configuré de manière à adapter les informations sur le support de stockage (50) sur la base du signal de collision (S_{b}) suivant un critère prédéfini.

11. Véhicule agricole pouvant se déplacer de manière autonome (10, 12) selon la revendication 10, dans lequel le critère prédéfini:
- est un calibrage de la position actuelle, et/ou
- est l'ajustement de l'itinéraire (200, 202) si le circuit de commande (40) reçoit un signal de collision (S_{b}) au moins deux fois plus ou moins au même point le long de l'itinéraire (200, 202), et/ou
- est l'ajustement de l'itinéraire (200, 202) si le circuit de commande (40) ne reçoit aucun signal de collision (S_{b}) à l'endroit où, selon le support de stockage (50), un obstacle (O₁₀₂, O₁₆₂) devrait être présent.

12. Véhicule agricole pouvant se déplacer de manière autonome (10, 12) selon l'une des revendications 1 à 11, dans lequel le support de stockage (50) contient des informations relatives à des obstacles (O₁₀₂, O₁₆₂) sur l'itinéraire (200, 202).

13. Véhicule agricole pouvant se déplacer de manière autonome (10, 12) selon l'une des revendications 1 à 12, dans lequel le véhicule agricole pouvant se déplacer de manière autonome (10, 12) comprend un capteur à ultrasons (62) et/ou un capteur optique (62) pour identifier des obstacles (O₁₀₂, O₁₆₂).

14. Véhicule agricole pouvant se déplacer de manière autonome (10, 12) selon la revendication 12 ou 13, dans lequel le circuit de commande (40) est configuré de manière à s'approcher de l'obstacle (O₁₀₂, O₁₆₂) sur l'itinéraire (200, 202) d'une manière prédéfinie.

15. Procédé pour commander un véhicule agricole pouvant se déplacer de manière autonome (10, 12) pour des applications agricoles, dans lequel le véhicule agricole pouvant se déplacer de manière autonome (10, 12) comprend un moteur (20) pour entraîner le véhicule agricole pouvant se déplacer de manière autonome (10, 12), et comprend une batterie (30) pour fournir de l'énergie au moteur (20), et dans lequel le véhicule agricole pouvant se déplacer de manière autonome (10, 12) comprend un circuit de commande (40), dans lequel le procédé comprend les étapes suivantes
- régler une vitesse (V_{A}, V_{B}, ...) du véhicule agricole pouvant se déplacer de manière autonome (10, 12), dans lequel l'énergie (E_{A}, E_{B}, ...) puisée dans la batterie (30) sur une distance prédéfinie (Δx) est minimale, et dans lequel le procédé comprend l'étape consistant à:
- mesurer l'énergie (E₀) puisée dans la batterie (30) sur la distance prédéfinie (Δx), et dans lequel le véhicule agricole pouvant se déplacer de manière autonome (10, 12) comprend un support de stockage (50) pour stocker des informations d'itinéraire, dans lequel l'itinéraire (200, 202) est divisé en sous-segments (202A, 202B, ...) avec une valeur de vitesse (V_{A}, V_{B}, ...) pour chaque sous-segment (202A, 202B, ...) pour le véhicule agricole pouvant se déplacer de manière autonome (10, 12) et une valeur d'énergie (E_{A}, E_{B}, ...) qui représente la quantité d'énergie qui est requise si le sous-segment (202A, 202B, ...) est parcouru avec la valeur de vitesse associée (V_{A}, V_{B}, ...), dans lequel le procédé comprend l'étape consistant à:
- comparer l'énergie mesurée (E₀) puisée dans la batterie (30) pendant le passage à travers un sous-segment défini (202C) avec la valeur d'énergie stockée (E_{C}) pour le sous-segment concerné (202C).

16. Procédé selon la revendication 15, dans lequel le procédé comprend les étapes suivantes:
- régler une vitesse différente (V₀) du véhicule agricole pouvant se déplacer de manière autonome (10, 12) qui diffère de la vitesse stockée (V_{C}) pour le sous-segment concerné (202C), et
- comparer l'énergie mesurée (E₀) puisée dans la batterie (30) pendant le passage à travers le sous-segment concerné (202C) avec la valeur d'énergie stockée (E_{C}) pour le sous-segment concerné (202C), et
- remplacer la valeur de vitesse stockée (V_{C}) par la valeur de vitesse différente (V₀) et/ou remplacer la valeur d'énergie stockée (E₀) par l'énergie mesurée (E_{C}), si l'énergie mesurée (E₀) pendant la valeur de vitesse différente (V₀) est inférieure à la valeur d'énergie (E_{C}) stockée dans le support de stockage (50).

17. Logiciel pour gérer un véhicule agricole pouvant se déplacer de manière autonome (10, 12), dans lequel le logiciel est configuré de manière à commander le véhicule agricole pouvant se déplacer de manière autonome (10, 12) de telle sorte que le véhicule agricole pouvant se déplacer de manière autonome (10, 12) exécute les étapes de procédé selon les revendications 15 à 16.
